## Europäisches Patentamt
## European Patent Office
## Office européen des brevets

(19)

(11) Numéro de publication: **0 156 730**
**B1**

(12) # FASCICULE DE BREVET EUROPÉEN

(45) Date de publication du fascicule du brevet:
**21.09.88**

(51) Int. Cl.⁴: **F 16 C 39/06**, H 02 K 7/02

(21) Numéro de dépôt: **85400550.1**

(22) Date de dépôt: **22.03.85**

(54) **Dispositif de compensation des défauts géométriques d'un anneau de détecteur radial de suspension magnétique active de rotor.**

(30) Priorité: **26.03.84 FR 8404651**

(43) Date de publication de la demande:
**02.10.85 Bulletin 85/40**

(45) Mention de la délivrance du brevet:
**21.09.88 Bulletin 88/38**

(84) Etats contractants désignés:
**CH DE GB IT LI SE**

(56) Documents cité:
**DE-A-3 120 691**
**FR-A-2 149 644**

(73) Titulaire: **SOCIETE EUROPEENNE DE PROPULSION (S.E.P.) Société Anonyme dite:, 24 Rue Salomon de Rothschild, F-92150 Suresnes (FR)**

(72) Inventeur: **Brunet, Maurice, Le Bout aux Roussel Ste Colombe, F-27950 St Marcel (FR)**
Inventeur: **Lacour, Michel, 42 rue St Lazare, F-27200 Vernon (FR)**

(74) Mandataire: **Thevenet, Jean- Bruno, Cabinet BEAU DE LOMENIE 55 rue d'Amsterdam, F-75008 Paris (FR)**

EP 0 156 730 B1

## Description

La présente invention a pour objet un dispositif de compensation des défauts géométriques d'un anneau de détecteur radial de la position d'un rotor de grand diamètre suspendu à l'aide d'au moins un palier magnétique actif radial muni de bobines d'électro-aimants dont le courant est asservi en fonction de signaux fournis par ledit détecteur, le dispositif comprenant une mémoire pour enregistrer en fonction de la position angulaire du rotor, une pluralité d'informations représentatives des défauts géométriques de l'anneau rotatif du détecteur radial de position ou de la partie du rotor située en regard du détecteur radial de position et un circuit de compensation pour appliquer au signal fourni par le détecteur radial de position, un signal de compensation élaboré à partir des informations correspondantes enregistrées dans la mémoire pour différentes positions angulaires du rotor.

Une suspension magnétique active de rotor comprend des paliers magnétiques radiaux munis d'enroulements d'électro-aimants parcourus par un courant dont l'intensité est régulée à l'aide d'un circuit d'asservissement à partir des signaux fournis par des détecteurs de la position radiale du rotor afin de maintenir le rotor dans une position prédéterminée.

Les détecteurs de la position radiale d'un rotor peuvent être de type optique, capacitif ou inductif. Dans le cas des détecteurs de type inductif, tels que ceux décrits par exemple dans le brevet français FR-A-2 214 890, une pluralité de pièces magnétiques en forme de U, solidaires d'un stator, sont réparties autour du rotor et font face à une armature annulaire ferromagnétique solidaire du rotor. L'armature annulaire ferromagnétique, qui peut être rapportée sur le rotor ou être constituée par une portion rectifiée de la surface extérieure du rotor, reste séparée des pôles des pièces statoriques en forme de U par un entrefer, mais permet une fermeture du circuit magnétique. Les variations de la position radiale du rotor se traduisent par des modifications de la largeur de l'entrefer et par suite par des modifications des self inductances des bobines enroulées autour des pièces statoriques réparties à la périphérie du rotor. Les signaux présents aux bornes des bobines enroulées autour des pièces statoriques permettent ainsi de disposer d'informations relatives aux variations de la position radiale du rotor, lesquelles informations permettent d'asservir le courant des électro-aimants de palier.

Les signaux fournis par des détecteurs radiaux de type inductif ne sont toutefois la représentation fidèle des déplacements réels de l'axe du rotor que dans la mesure où l'armature annulaire est parfaitement cylindrique et centrée sur l'axe du rotor. Or, ceci n'est jamais le cas en pratique, pour les rotors de grand diamètre tels que les rotors destinés a de grosses machines tournantes.

On a déja proposé divers moyens visant à permettre de s'affranchir au moins en partie de la non-circularité rigoureuse des rotors ou armatures annulaires montés sur les rotors, laquelle non-circularité rigoureuse conduit à des perturbations synchrones qu'il convient d'amortir au maximum.

Ainsi, la configuration particulière des détecteurs inductifs, qui peuvent présenter un agencement spécial des couples de pièces magnétiques réparties a la périphérie du rotor, comme indiqué dans le brevet français FR-A-2 214 890, permet de s'affranchir au moins partiellement des perturbations créées par une variation du rayon du rotor.

De même, la mise en oeuvre d'un dispositif de compensation des perturbations synchrones tel que celui décrit dans le brevet français FR-A-2 336 602 permet d amortir les effets perturbateurs dûs au balourd.

Ces dispositifs ne permettent toutefois pas de supprimer totalement les effets perturbateurs dûs à des défauts dans la géométrie de l'anneau servant de référence pour les détecteurs radiaux de la position du rotor.

C'est pourquoi, il a également été proposé par le document DE-A-31 20691 d'enregistrer dans une mémoire une pluralité d'informations correspondant aux valeurs des défauts de géométrie de l'anneau du détecteur pour différentes positions angulaires régulièrement réparties de l'anneau. Un circuit de compensation relié à la mémoire peut ensuite, pour chaque position angulaire discrète à laquelle correspond une information enregistrée, appliquer au signal fourni par le détecteur radial un signal de correction élaboré à partir de l'information enregistrée qui tend à compenser le défaut de géométrie de l'anneau du détecteur pour cette position angulaire.

Un tel type de dispositif de compensation de défauts géométriques d'un anneau de détecteur permet théoriquement de réaliser une correction complète des irrégularités de l'anneau, dans la mesure où le nombre d'informations de correction est suffisamment grand, c'est-à-dire que l'écart entre deux positions angulaires discrètes successives pour lesquelles on a enregistré une information de correction est suffisamment faible.

Un problème sérieux se pose cependant au niveau de l'enregistrement des informations de correction dans la mémoire. En effet, pour déterminer l'amplitude des défauts géométriques d'un anneau de détecteur, il est nécessaire de placer le rotor en position verticale et de le faire tourner dans les paliers magnétiques de telle manière que la raideur des paliers soit très réduite. Dans ce cas, les signaux fournis par un détecteur radial correspondent bien à l'image géométrique de l'anneau du détecteur et il suffit donc d'enregistrer ces signaux dans la mémoire pour différentes positions angulaires du rotor. Les signaux de correction à ajouter aux signaux délivrés par le détecteur en fonctionnement normal seront alors simplement les signaux enregistrés dans la mémoire et dont on aura changé le signe. Cette façon de faire présente cependant des inconvénients et n'est pas applicable pour tous les types de rotor. En effet, lors de la détermination des défauts géométriques de l'anneau de détecteur, le rotor doit non seulement être placé verticalement, mais aussi être entraîné en rotation à une vitesse super-critique. Ceci n'est pas possible en pratique pour un grand nombre de machines à rotor de grand diamètre.

L'invention vise précisément à remédier aux inconvénients précités et à permettre de réaliser facilement une compensation des défauts géométriques d'un anneau de détecteur radial même dans le cas d'un rotor de grand diamètre.

Ceci est réalisé grâce à un dispositif du type mentionné en tête de la description qui, conformément à l'invention, comprend en outre un rotor de référence de faible diamètre présentant au moins une surface de référence de précision optique coopérant avec un détecteur radial de référence, des moyens de montage du rotor de faible diamètre à l'extrémité du rotor de grand diamètre, de manière que le rotor de faible diamètre tourne en synchronisme avec le rotor de grand diamètre en étant centré sur l'axe de rotation de ce dernier, et des moyens d'enregistrement dans la mémoire d'informations correspondant à la différence entre les signaux fournis par le détecteur radial associé au rotor de grand diamètre et les signaux fournis par le détecteur radial de référence, en fonction de la position angulaire du rotor obtenue à partir d'un codeur angulaire, lorsque le rotor de grand diamètre et le rotor de faible diamètre sont soumis à un mouvement de rotation simultanée à faible vitesse.

De préférence, le rotor de faible diamètre est monté sur le rotor de grand diamètre de façon amovible.

Dans ce cas, le rotor de faible diamètre est maintenu dans une partie d'extrémité du rotor de grand diamètre à l'aide d'une pluralité d'éléments élastiques régulièrement répartis à la périphérie d'une extrémité dudit rotor de faible diamètre.

Avantageusement, les éléments élastiques répartis à la périphérie d'une extrémité du rotor de faible diamètre comprennent à la fois des éléments élastiques de faible raideur et des éléments élastiques de grande raideur.

De préférence, le rotor de faible diamètre est maintenu dans une partie d'extrémité du rotor de grand diamètre à l'aide d'au moins deux éléments élastiques de faible raideur disposés radialement à 90° l'un par rapport à l'autre, et d'au moins deux éléments élastiques de grande raideur disposés radialement de façon diamétralement opposée aux éléments élastiques de faible raideur, et en ce que des moyens de réglage du centrage du rotor de faible diamètre sont associés à chacun des éléments élastiques.

Dans le cas fréquent d'un rotor creux de grand diamètre, le rotor de faible diamètre est monté coaxialement au rotor de grand diamètre à l'aide de moyens de montage disposés à chacune des extrémités du rotor de grand diamètre.

D'autres caractéristiques et avantages de l'invention ressortiront de la description qui fait suite d'un mode particulier de réalisation, donné à titre d'exemple, en référence au dessin annexé, sur lequel:

- la figure 1 est une vue schématique en élévation du dispositif selon l'invention appliqué à un rotor de grand diamètre, et

- la figure 2 est une vue partiellement en coupe axiale d'un second exemple de rotor de grand diamètre auquel est applicable l'invention, et

- la figure 3 est une vue de dessus du dispositif de la figure 2.

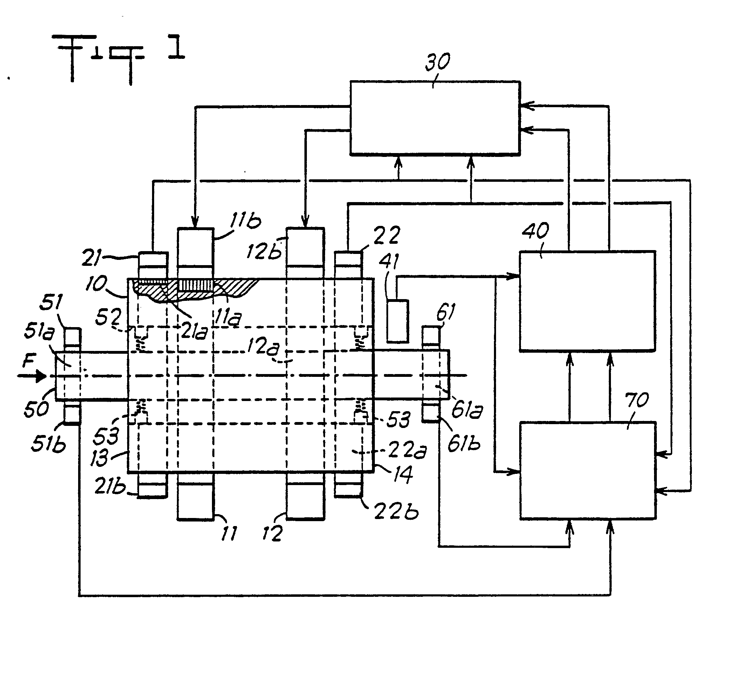

On voit sur la figure 1 un rotor 10 de grande section, présentant un diamètre supérieur à environ 100 mm, par exemple de l'ordre de 200 à 400 mm, supporté par deux paliers magnétiques actifs radiaux 11, 12 représentés schématiquement avec chacun une armature annulaire 11a, 12a montée sur le rotor et un stator 11b, 12b muni d'enroulements d'électro-aimants, non représentés, alimentés en courant à partir d'un circuit d'asservissement 30.

Des détecteurs 21, 22 de type inductif déterminent la position radiale du rotor 10 et envoient des signaux au circuit d'asservissement 30. Chaque détecteur comprend, de façon connue, plusieurs bobinages, non représentés, montés sur une armature fixe 21b, 22b qui entoure et fait face à une armature annulaire 21a, 22a solidaire du rotor 10. L'armature annulaire 21a, 22a peut être constituée par un anneau de ferrite ou un empilement d'anneaux ferromagnétiques rapportés sur la surface extérieure du rotor 10. L'armature annulaire 21a, 22a peut toutefois être constituée par une simple surface conductrice rectifiée réalisée directement sur le rotor 10. Dans tous les cas, si le diamètre de l'armature 21a, 22a est relativement important, des irrégularités apparaissent sur cette armature et il convient de déterminer, pour chaque point de cette armature défini par sa position angulaire à partir d'une position de référence, un signal de correction qui est ajouté au signal délivré par le détecteur afin de compenser les irrégularités de diamètre de l'armature.

Pour cela, une pluralité d'informations de correction sont enregistrées dans une mémoire 40. Chaque information de correction est associée à une position angulaire donnée. Le nombre N d'informations de correction est fonction de la précision souhaitée, mais peut être relativement élevé afin de permettre de reconstituer avec fidélité le profil de l'armature de détecteur utilisée 21a, 22a.

On décrira maintenant le dispositif permettant d'enregistrer dans la mémoire 40 facilement et avec précision, les signaux de correction nécessaires.

Un cylindre de référence 50 de faible diamètre, par exemple, inférieur à environ 50 mm, de préférence compris entre environ 20 et 30 mm, et présentant une surface de très bonne qualité, est monté à l'extrémité du rotor 10 voisine du détecteur radial 21, de manière à être centré sur l'axe du rotor 10 et solidaire en rotation de celui-ci. Un détecteur radial 51 de la position du cylindre de référence 50 est monté en regard dudit cylindre. Le détecteur radial 51 peut présenter une configuration classique, analogue à celle du détecteur 21, avec un stator 51b et une armature 51a qui peut être constituée directement par la surface conductrice du cylindre 50. Toutefois, compte tenu des dimensions réduites du cylindre de référence 50, l'anneau de référence 51a peut être réalisé par des techniques de micromécanique de façon à ne présenter pratiquement aucune irrégularité, contrairement à l'armature annulaire 21a du détecteur 21. Grâce à son faible diamètre et à son faible poids, le cylindre de référence 50 peut notamment être soumis à des contrôles poussés par exemple à l'aide de dispositifs optiques.

L'enregistrement des informations de correction relatives à l'armature annulaire 21a s'opère de la façon suivante: Le rotor 10 est entraîné en rotation à faible vitesse, le circuit d'asservissement 30 étant réglé de manière à présenter un gain élevé. Les signaux émis par le détecteur radial 21 sont alors appliqués non seulement au circuit d'asservissement 30, mais également au circuit 70 d'enregistrement d'informations de correction. Parallèlement, le cylindre de référence 50, solidaire en rotation du rotor 10 et centré sur l'axe de rotation du rotor 10, est entraîné en rotation en synchronisme avec le rotor 10. Les signaux délivrés par le détecteur radial 51 placé en regard du cylindre de référence 50 sont également appliqués au circuit d'enregistrement 70 pour constituer des signaux de référence de position du rotor 50, et par suite du rotor 10. Un codeur angulaire 41 placé en regard du rotor 10 émet des impulsions à des intervalles correspondant à un pas de déplacement angulaire prédéterminé. A chaque impulsion émise par le codeur angulaire 41, un signal correspondant à la différence entre le signal émis par le détecteur 21 et le signal émis par le détecteur de référence 51 est élaboré par le circuit d'enregistrement 70 pour être enregistré dans la mémoire 40 en tant qu'information de correction, en association avec une donnée fournie par le codeur 41 et relative à la position angulaire du rotor 10. Les signaux enregistrés dans la mémoire 40 représentent bien ainsi les défauts géométriques de l'armature 21a pour différentes positions angulaires successives du rotor. Une fois effectuée dans la mémoire 40 l'inscription d'informations de correction pour un ensemble de points répartis sur l'armature annulaire 21a, le cylindre de référence 50, le détecteur 51 et le circuit d'enregistrement 70 peuvent être mis hors service. Le circuit d'asservissement 30 combinera ensuite automatiquement, pour chaque position angulaire du rotor 10 déterminée par le codeur angulaire 41, les informations de correction stockées dans la mémoire 40 avec les signaux émis par le détecteur 21, de sorte qu'un positionnement précis et stable du rotor 10 peut être réalisé malgré les défauts géométriques de l'armature 21a.

Le cylindre de référence 50 peut être monté de façon amovible dans un logement 52 formé à l'extrémité du rotor 10 voisine du détecteur 21. Des éléments 53 formant ressort présentant une extrémité fixée au rotor 10 sont disposés dans le logement 52 de manière à maintenir le cylindre de référence 50 centré sur l'axe du rotor 10. Les éléments élastiques 53 par exemple au nombre de 4 sont régulièrement répartis autour du cylindre 50.

Comme on peut le voir sur la figure 1, le cylindre de référence 50 peut traverser coaxialement le rotor creux de grand diamètre 10 et être monté à l'extrémité 14 du rotor 10 voisine du second détecteur radial 22, à l'aide de ressorts 53 de façon analogue au montage à l'extrémité 13 du rotor 10 voisine du premier détecteur radial 21. La partie d'extrémité du rotor 50 émergeant au-delà de l'extrémité 14 du rotor 10 présente également un excellent état de surface et définit une seconde surface annulaire de référence 61a pouvant coopérer avec le stator 61b d'un détecteur radial 61 analogue au détecteur radial 51 pour permettre l'enregistrement des défauts de l'armature annulaire 22a de la façon expliquée précédemment pour l'enregistrement des défauts de l'armature annulaire 21a.

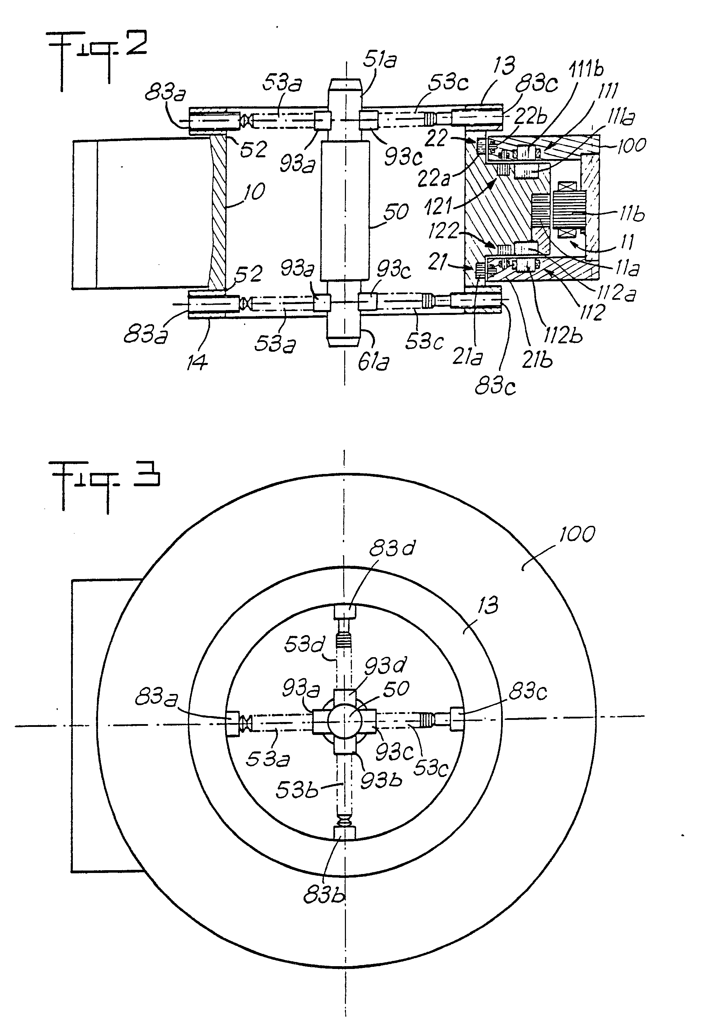

Les figures 2 et 3 montrent un rotor court de grand diamètre 10 monté dans un bâti 100 à l'aide de paliers magnétiques actifs axiaux 111, 112 coopérant avec les deux faces frontales du corps de rotor 10, et d'un palier magnétique actif radial 11 coopérant avec la face cylindrique externe du corps de rotor 10. Chaque palier axial 111, 112 comprend un stator 111b, 112b muni d'enroulements d'électro-aimants montés sur le bâti 100 et coopérant avec une armature 111a, 112a solidaire du corps de rotor 10. Des détecteurs 121, 122 de la position axiale du rotor sont disposés à côté des paliers axiaux 111, 112 respectivement et délivrent des signaux permettant d'asservir le courant circulant dans les électro-aimants 111b, 112b des paliers axiaux 111, 112. Ces derniers peuvent présenter par exemple une configuration en plusieurs secteurs de la manière décrite dans le brevet français FR-A-2 377 549.

Le courant circulant dans les électro-aimants du stator 11b du palier magnétique radial actif 11 est asservi à partir des signaux délivres par au moins un détecteur radial 21, 22 qui comprend un stator 21b, 22b monté sur le bâti 100, composé de bobinages d'électro-aimants enroulés sur une armature fixe, et faisant face à une armature annulaire 21a, 22a disposée sur le pourtour cylindrique du rotor 10. Compte tenu du grand diamètre du rotor 10, qui peut être par exemple de l'ordre de 300 à 400 mm et comme dans le cas de la figure 1, l'armature annulaire 21a, 22a du détecteur radial 21, 22 présente des irrégularités résiduelles qui doivent être compensées. Pour cela, et selon le processus décrit en référence à la figure 1, un rotor de référence 50 de faible diamètre est monté coaxialement à l'intérieur du rotor creux 10 à l'aide d'éléments' de centrage disposés à chaque extrémité 13, 14 du rotor 10 de grand diamètre. A chaque extrémité du rotor 50 de faible diamètre, des surfaces cylindriques annulaires 51a, 61a sont réalisées avec un état de surface de très bonne qualité comme dans le cas de la figure 1, afin de constituer des armatures annulaires de référence centrées sur l'axe du rotor 10 et permettant un enregistrement des défauts de l'armature annulaire 21a, 22a comme indiqué précédemment en référence à la figure 1. Pour des raisons de simplification, on n'a pas représenté sur les figures 2 et 3 les circuits 30, 40, 70, ni le codeur angulaire 41 ou les stators des détecteurs radiaux de référence 51, 61, qui sont semblables aux éléments correspondants représentés sur la figure 1 et déjà décrits plus haut.

Les figures 2 et 3 permettent de voir de façon plus détaillée un exemple de moyens de centrage amovibles 53 assurant un montage rapide du rotor 50 et permettant de maintenir le rotor de référence 50 parfaitement centré sur l'axe de référence du rotor 10.

Du côté de chaque face frontale d'extrémité 13, 14 du rotor de grand diamètre 10, des moyens de centrage à ressort sont répartis en croix selon deux directions orthogonales dans un plan perpendiculaire à l'axe du rotor 10 de grand diamètre. Les ressorts 53a à 53d des moyens de centrage prennent appui sur le rotor 50 de faible diamètre par l'intermédiaire de pièces 93a à 93d respectivement présentant une face concave dont la courbure est adaptée à la section du cylindre de référence 50. L'extrémité des ressorts 53a à 53d opposée aux pièces 93a à 93d porte sur des pièces 83a à 83d respectivement, rendues solidaires du rotor 10 de grand diamètre. Les pièces 83a à 83d sont avantageusement constituées par des vis permettant de décaler facilement les pièces 93a à 93d solidaires de l'extrémité des ressorts 53a à 53d voisine du rotor de faible diamètre 50 et par suite d'ajuster avec précision la position de ce rotor 50.

Les ressorts 53a à 53d peuvent être constitués par exemple à l'aide d'empilements de rondelles élastiques en acier telles que des rondelles Belleville. Pour faciliter le centrage du rotor 50, il est préférable que dans chaque plan de maintien du rotor 50, c'est-à-dire d'une part dans le plan défini par les ressorts diamétralement opposés 53a, 53c et d'autre part dans le plan défini par les ressorts diamétralement opposés 53b, 53d, l'un des ressorts 53c, 53d respectivement présente une raideur élevée, afin de permettre un réglage grossier rapide du centrage du rotor de mesure 50 dans deux directions au moyen des vis correspondantes 83c, 83d, tandis que l'autre ressort 53a, 53b respectivement, présente une raideur faible, par exemple dix fois moindre que celle des ressorts 53c, 53d, afin de permettre un réglage fin du centrage du rotor de mesure 50 dans les deux directions orthogonales.

**Revendications**

1. Dispositif de compensation des défauts géométriques d'un anneau de détecteur radial de la position d'un rotor de grand diamètre (10) suspendu à l'aide d'au moins un palier magnétique actif radial (11; 12) muni de bobines d'électro-aimants (11b; 12b) dont le courant est asservi en fonction de signaux fournis par ledit détecteur (21; 22), le dispositif comprenant une mémoire (40) pour enregistrer en fonction de la position angulaire du rotor (10), une pluralité d'informations représentatives des défauts géométriques de l'anneau rotatif (21a; 22a) du détecteur radial de position (21; 22) ou de la partie du rotor (10) située en regard du détecteur radial de position (21; 22) et un circuit de compensation (30) pour appliquer au signal fourni par le détecteur radial de position (21; 22), un signal de compensation élaboré à partir des informations correspondantes enregistrées dans la mémoire (40) pour différentes positions angulaires du rotor, caractérisé en ce qu'il comprend un rotor de référence (50) de faible diamètre présentant au moins une surface de référence de précision optique (51a; 61a) coopérant avec un détecteur radial de référence (51; 61), des moyens (53) de montage du rotor (50) de faible diamètre à l'extrémité du rotor (10) de grand diamètre, de manière que le rotor de faible diamètre (50) tourne en synchronisme avec le rotor de grand diamètre (10) en étant centré sur l'axe de rotation de ce dernier, et des moyens (70) d'enregistrement dans la mémoire (40) d'informations correspondant à la différence entre les signaux fournis par le détecteur radial (21; 22) et les signaux fournis par le détecteur radial de référence (51; 61), en fonction de la position angulaire du rotor (10; 50) obtenue à partir d'un codeur angulaire (41), lorsque le rotor de grand diamètre (10) et le rotor (50) de faible diamètre sont soumis à un mouvement de rotation simultanée à faible vitesse.

2. Dispositif de compensation selon la revendication 1 caractérisé en ce que le rotor de faible diamètre (50) est monté sur le rotor (10) de grand diamètre de façon amovible.

3. Dispositif de compensation selon la revendication 2, caractérisé en ce que le rotor de faible diamètre (50) est maintenu dans une partie d'extrémité du rotor de grand diamètre (10) à l'aide d'une pluralité d'éléments élastiques (53) régulièrement répartis à la périphérie d'une extrémité dudit rotor de faible diamètre (50).

4. Dispositif de compensation selon la revendication 3, caractérisé en ce que les éléments élastiques (53) répartis à la périphérie d'une extrémité du rotor de faible diamètre (50) comprennent à la fois des éléments élastiques (53a, 53b) de faible raideur et des éléments élastiques (53c, 53d) de grande raideur.

5. Dispositif de compensation selon la revendication 4, caractérisé en ce que le rotor de faible diamètre (50) est maintenu dans une partie d'extrémité du rotor de grand diamètre (10) à l'aide d'au moins deux éléments élastiques de faible raideur (53a, 53b) disposés radialement à 90° l'un par rapport à l'autre, et d'au moins deux éléments élastiques de grande raideur (53c, 53d) disposés radialement de façon diamétralement opposée aux éléments élastiques de faible raideur (53a, 53b), et en ce que des moyens (83a à 83d) de réglage du centrage du rotor de faible diamètre (50) sont associés à chacun des éléments élastiques (53a à 53d).

6. Dispositif de compensation selon l'une quelconque des revendications 1 à 5, caractérisé en ce que le rotor de faible diamètre (50) est monté coaxialement au rotor de grand diamètre à l'aide de moyens de montage (53) disposés à chacune des extrémités (13, 14) du rotor de grand diamètre (10).

**Claims**

1. A device for compensating geometrical defects in the ring of a detector of the radial position of a rotor of large diameter (10) suspended by means of at least one radial active magnetic bearing (11; 12) equipped with electromagnetic coils (11b; 12b) of which the current is controlled as a function of signals produced by said detector (21; 22), said device comprising a memory (40) for recording in relation to the angular position of the rotor (10), a plurality of data representing geometrical defects in the rotating ring (21a; 22a) of the radial position detector (21 ; 22) or of the part of the rotor (10) situated opposite the radial position detector (21 ; 22) and a compensation circuit (30) for applying to the signal produced by the radial position detector (21; 22), a compensation signal worked out from the corresponding data recorded in the memory (40) for different angular positions of the rotor, characterized in that it comprises a reference rotor (50) of small diameter with at least one reference surface of optical precision (51a; 61a) cooperating with a radial reference detector (51; 61) means (53) for mounting the rotor (50) of small diameter at the end of the rotor (10) of large diameter, so that the rotor of small diameter (50) can rotate synchronously with the rotor of large diameter (10) by being centered on the rotation axis of the latter, and means (70) for recording into the memory (40) data which correspond to the difference between the signals produced by the radial detector (21; 22) and the signals produced by the radial reference detector (51; 61), as a function of the angular position of the rotor (10;

50) obtained from an angular encoder (41), when the rotor of large diameter (10) and the rotor (50) of small diameter are subjected to a movement of simultaneous rotation at low speed.

2. Compensation device according to claim 1, characterized in that the rotor of small diameter (50) is removably mounted on the rotor (10) of large diameter.

3. Compensation device according to claim 2, characterized in that the rotor of small diameter (50) is held in an end part of the rotor of large diameter (10) by means of a plurality of elastic elements (53) regularly distributed on the periphery of one end of said rotor or small diameter (50).

4. Compensation device according to claim 3, characterized in that said elastic elements (53) distributed on the periphery of one end of the rotor of small diameter (50) comprise both elastic elements (53a, 53b) of low stiffness and elastic elements (53c, 53d) of high stiffness.

5. Compensation device according to claim 4, characterized in that the rotor of small diameter (50) is held in an end part of the rotor of large diameter (10) by means of at least two elastic elements of low stiffness (53a, 53b) arranged radially at 90° one from the other, and at least two elastic elements of high stiffness (53c, 53d) disposed radially in diametrally opposite fashion with respect to the elastic elements of low stiffness (53a, 53b), and in that means (83a to 83d) for adjusting the centering of the rotor of small diameter (50) being operationally coupled to each of said elastic elements (53a to 53d).

6. Compensation device according to any one of claims 1 to 5, characterized in that the rotor of small diameter (50) is mounted co-axially to the rotor of large diameter using mounting means (53) placed at each end (13, 14) of the rotor of large diameter (10).

**Patentansprüche**

1. Ausgleicheinrichtung der geometrischen Fehler eines radialen Stellungsdetektorrings eines Rotors mit großem Durchmesser (10), der anhand von mindestens einem radialen aktiv magnetischen Lager (11, 12) mit elektromagnetischen Spulen (11b, 12b) aufgehängt ist, die in Funktion der vom Detektor (21, 22) ausgegebenen Signale mit Strom versorgt werden, mit
- einem Speicher (40) zur Aufnahme in Funktion der Winkelstellung des Rotors (10) einer Vielzahl von Informationen, die die geometrischen Fehler des sich drehenden Rings (21a, 22a) des radialen Stellungsdetektors (21, 22) oder des dem radialen Stellungsdetektor (21, 22) gegenüberliegenden Teils des Rotors (10) darstellen, und
- einer Kompensationsschaltung (30) zur Abgabe eines Kompensationssignals, das anhand der im Speicher (40) aufgenommenen Daten für verschiedene Winkelstellungen des Rotors aufgearbeitet wurde, an das vom radialen Stellungsdetektor (21, 22) ausgegebene Signal, gekennzeichnet durch einen Bezugsrotor (50) mit geringem Durchmesser mit mindestens einer Bezugsfläche von optischer Genauigkeit (51a, 61a), die mit einem radialen Bezugsdetektor (51, 61) zusammenwirkt, Mittel (53) zur Befestigung des Rotors (50) mit geringem Durchmesser am Ende des Rotors (10) mit großem Durchmesser, so daß der Rotor mit geringem Durchmesser (50) sich synchron mit dem Rotor mit großem Durchmesser (10) dreht, wobei er auf dessen Drehachse zentriert ist, und Mittel (70) zur Aufnahme im Speicher (40) von Informationen, die der Differenz zwischen den vom radialen Detektor (21, 22) ausgegebenen Signalen und den vom radialen Bezugsdetektor (51, 61) ausgegebenen Signalen, in Funktion der Winkelstellung des Rotors (10, 50) entsprechen und die aus einem Winkelcodierer (41) bei gleichzeitiger Drehung mit kleiner Geschwindigkeit des Rotors mit großem Durchmesser (10) und des Rotors (50) mit geringem Durchmesser erhalten wird.

2. Ausgleicheinrichtung nach Anspruch 1, dadurch gekennzeichnet, daß der Rotor mit geringem Durchmesser (50) auf dem Rotor (10) mit großem Durchmesser beweglich angebracht ist.

3. Ausgleicheinrichtung nach Anspruch 2, dadurch gekennzeichnet, daß der Rotor mit geringem Durchmesser (50) in einem Endbereich des Rotors mit großem Durchmesser (10) mit einer Vielzahl von elastischen Elementen (53) gehalten wird, die regelmäßig auf dem Umfang eines Endes des Rotors mit geringem Durchmesser (50) verteilt sind.

4. Ausgleicheinrichtung nach Anspruch 3, dadurch gekennzeichnet, daß die auf dem Umfang eines Endes des Rotors mit geringem Durchmesser (50) verteilten elastischen Elemente (53) sowohl elastische Elemente (53a, 53b) mit geringer Steife und elastische Elemente (53c, 53d) von großer Steife umfassen.

5. Ausgleicheinrichtung nach Anspruch 4, dadurch gekennzeichnet, daß der Rotor mit geringem Durchmesser (50) in einem Endbereich des Rotors mit großem Durchmesser (10) mit mindestens zwei elastischen Elementen von geringer Steife (53a, 53b) die radial mit 90° zueinander angeordnet sind, und mindestens zwei elastischen Elementen von großer Steife (53c, 53d), die radial den elastischen Elementen mit geringer Steife (53a, 53b) diametral entgegengesetzt angeordnet sind,gehalten wird, und daß Steuervorrichtungen (83a bis 83d) zur Zentrierung des Rotors mit geringem Durchmesser (50) mit jedem der elastischen Elemente (53a bis 53d) verbunden sind.

6. Ausgleicheinrichtung nach einem der Ansprüche 1 bis 5, dadurch gekennzeichnet, daß der Rotor mit geringem Durchmesser (50) koaxial zum Rotor mit großem Durchmesser mit Hilfe von Montagemitteln (53) angebracht ist, die an jedem Ende (13, 14) des Rotors mit großem Durchmesser (10) angeordnet sind.

Fig 1

0 156 730

Fig. 2

Fig. 3

3